# EUROPEAN PATENT APPLICATION

(11) **EP 3 367 582 A1**
(43) Date of publication of application: **29.08.2018**
(21) Application number: 18156537.5
(22) Date of filing: 13.02.2018
(51) Int. Cl.: H04B 5/00, H02J 7/00, H04R 1/10

(54) **DATA PROCESSING METHOD, CHARGING DEVICE AND MOBILE TERMINAL**

(30) Priority: 24.02.2017 CN 201710104629
(71) Applicant: Beijing Xiaoniao Tingting Technology Co., Ltd, 100191 Beijing (CN)
(72) Inventor: LIU, Song, Beijing, Beijing 100191 (CN); ZHAO, Jian, Beijing, Beijing 100191 (CN); WANG, Tian, Beijing, Beijing 100191 (CN); JIANG, Binbin, Beijing, Beijing 100191 (CN)
(74) Representative: Gevers Patents

(57) **Abstract**

Provided are a data processing method, a charging device and a mobile terminal. A charging position of the charging device matches a wireless earphone. The method includes: when the wireless earphone is placed at the charging position of the charging device, a first connection is established between a first port of the charging device and a second port of the wireless earphone; through the first connection, the charging device supplies power to the wireless earphone, and data is transmitted between the charging device and the wireless earphone via the first connection; or, a wireless connection is established between the charging device and the wireless earphone through a wireless communication module of the charging device, and data is transmitted between the charging device and the wireless earphone via the wireless connection.

## Description

### TECHNICAL FIELD

The disclosure relates to a data processing technology, and in particular to a data processing method, a charging device and a mobile terminal.

### BACKGROUND

As living tempo quickens and electronic products develop rapidly, people have higher requirements on ease of use of wireless earphone products and the user experience. At present, wireless earphone products are constrained by product size and power consumption, thus it is impossible to put a large-capacity storage chip and a large-capacity battery into an earphone, so that it is necessary to frequently charge a wireless earphone. A manner of charging a wireless earphone is: charging a wireless earphone via a charging device (e.g., charging box or charging base). In the related art, the charging device has a single function namely a charging function.

### SUMMARY

In order to solve the existing technical problems, the embodiments of the disclosure provide a data processing method, a charging device and a mobile terminal.

To this end, the technical solutions in the embodiments of the disclosure are implemented as follows.

The embodiments of the disclosure provide a data processing method, applied to a charging device provided with a charging position, the charging position of the charging device matching a wireless earphone. The method includes the steps as follows.

When the wireless earphone is placed at the charging position of the charging device, a first connection is established between a first port of the charging device and a second port of the wireless earphone.

Through the first connection, the charging device supplies power to the wireless earphone, and data is transmitted between the charging device and the wireless earphone via the first connection.

Or, a wireless connection is established between the charging device and the wireless earphone through a wireless communication module of the charging device, and data is transmitted between the charging device and the wireless earphone via the wireless connection.

In the above-mentioned solutions, before data is transmitted between the charging device and the wireless earphone, the method further includes: establishing a first wireless connection between the charging device and a server through the wireless communication module of the charging device.

In the above-mentioned solutions, before data is transmitted between the charging device and the wireless earphone, the method further includes: establishing a second wireless connection between the charging device and a mobile terminal through the wireless communication module of the charging device.

The embodiments of the disclosure also provide a data processing method, applied to a mobile terminal. The method includes the steps as follows. A second wireless connection is established between the mobile terminal and a charging device through a wireless communication module of the charging device.

Data is transmitted between the mobile terminal and the charging device via the second wireless connection.

In the above-mentioned solutions, the method further includes: establishing a fourth wireless connection between the mobile terminal and a wireless earphone; and transmitting data between the mobile terminal and the wireless earphone through the fourth wireless connection.

The embodiments of the disclosure also provide a charging device. The charging device is provided with at least one charging position, the charging position matching a wireless earphone.

A first port is disposed in the charging position, and is configured to establish, when the wireless earphone is placed at the charging position of the charging device, a first connection with a second port of the wireless earphone. Power is supplied to the wireless earphone through the first connection, and data is transmitted between the charging device and the wireless earphone via the first connection.

Or, the charging device further includes a first wireless communication module, configured to establish a wireless connection with the wireless earphone, and transmit data between the charge device and the wireless earphone through the wireless connection.

In the above-mentioned solutions, the first wireless communication module is further configured to establish a first wireless connection with a server.

In the above-mentioned solutions, the first wireless communication module is further configured to establish a second wireless connection with a mobile terminal.

The embodiments of the disclosure also provide a mobile terminal. The mobile terminal includes: a second wireless communication module and a control module, wherein
the control module is configured to enable the second wireless communication module; and
the second wireless communication module is configured to establish a second wireless connection with a charging device, and transmit data between the mobile terminal and the charging device via the second wireless connection.

In the above-mentioned solutions, the second wireless communication module is further configured to establish a fourth wireless connection with a wireless earphone, and transmit data between the mobile terminal and the wireless earphone through the fourth wireless connection.

The embodiments of the disclosure provide a data processing method, a charging device and a mobile terminal. A charging position of the charging device matches a wireless earphone. The method includes: when the wireless earphone is placed at the charging position of the charging device, a first connection is established between a first port of the charging device and a second port of the wireless earphone; the charging device supplies power to the wireless earphone through the first connection, and data is transmitted between the charging device and the wireless earphone via the first connection; or, a wireless connection is established between the charging device and the wireless earphone through a wireless communication module of the charging device, and data is transmitted between the charging device and the wireless earphone via the wireless connection. By means of the technical solutions in the embodiments of the disclosure, in a charging process of a wireless earphone by a charging device, a data transmission channel is added to a charging interface. In this way, on one hand, a data transmission function is added to the charging device, and on the other hand, data interaction between the charging device and the wireless earphone is achieved, and data of the wireless earphone is updated in the charging process of the wireless earphone as well. In addition, data can be transmitted between the wireless earphone and the charging device via a wireless connection, thus the data transmission function is added to the charging device, and remote data transmission between the charging device and the wireless earphone is also achieved as well.

### BRIEF DESCRIPTION OF DRAWINGS

FIG. 1 shows a flowchart of a data processing method according to an embodiment 1 of the disclosure.
FIG. 2a and FIG. 2b illustrate application diagrams of a charging device and a wireless earphone according to an embodiment of the disclosure respectively.
FIG. 3 shows a flowchart of a data processing method according to an embodiment 2 of the disclosure.
FIG. 4 shows a flowchart of a data processing method according to an embodiment 3 of the disclosure.
FIG. 5 shows a flowchart of a data processing method according to an embodiment 4 of the disclosure.
FIG. 6 shows a flowchart of a data processing method according to an embodiment 5 of the disclosure.
FIG. 7 shows a flowchart of a data processing method according to an embodiment 6 of the disclosure.
FIG. 8 shows a flowchart of a data processing method according to an embodiment 7 of the disclosure.
FIG. 9 shows a flowchart of a data processing method according to an embodiment 8 of the disclosure.
FIG. 10 shows a flowchart of a data processing method according to an embodiment 9 of the disclosure.
FIG. 11 shows a flowchart of a data processing method according to an embodiment 10 of the disclosure.
FIG. 12a illustrates an appearance diagram of a charging device according to an embodiment of the disclosure.
FIG. 12b illustrates a module composition structure diagram of a charging device according to an embodiment of the disclosure.
FIG. 13 illustrates a composition structure diagram of a mobile terminal according to an embodiment of the disclosure.

### DETAILED DESCRIPTION

The disclosure will be further elaborated below through specific embodiments with reference to drawings.

### Embodiment 1

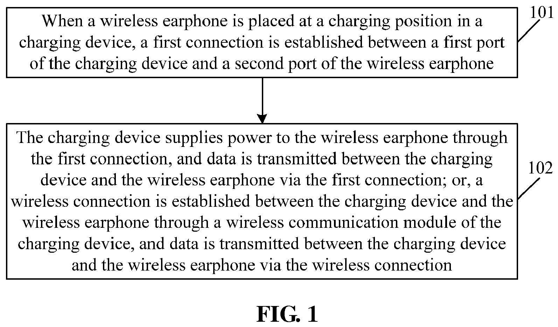

The embodiment of the disclosure provides a data processing method, applied to a charging device provided with a charging position. FIG. 1 shows a flowchart of a data processing method according to an embodiment 1 of the disclosure. As shown in FIG. 1, the method includes the steps as follows.

In step 101, when a wireless earphone is placed at the charging position of the charging device, a first connection is established between a first port of the charging device and a second port of the wireless earphone.

In step 102, the charging device supplies power to the wireless earphone through the first connection, and data is transmitted between the charging device and the wireless earphone via the first connection; or, a wireless connection is established between the charging device and the wireless earphone through a wireless communication module of the charging device, and data is transmitted between the charging device and the wireless earphone via the wireless connection.

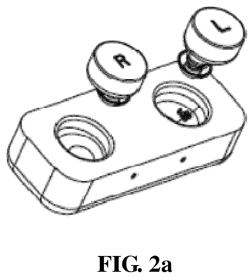

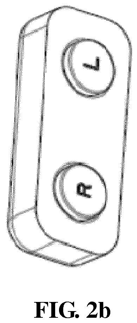

In the present embodiment, the charging device is provided with at least one charging position, the charging position matching the wireless earphone in shape. FIG. 2a and FIG. 2b illustrate application diagrams of a charging device and a wireless earphone according to an embodiment of the disclosure respectively. As shown in FIG. 2a, the bottom end of the charging position is provided with a first port, and a second port is disposed at one end of the wireless earphone, wherein one end of the wireless earphone may be an end opposite to an in-ear side. When the wireless earphone is put into the charging position of the charging device, the first port and the second port come into contact so as to establish a first connection, specifically as shown in FIG. 2b. As an implementation manner, the first port and the second port have oppositely-polar magnetic materials, so the first port and the second port may serve as magnetic-attraction type charging interfaces; and when the wireless earphone is put into the charging position of the charging device, the first port and the second port are automatically attracted, and a connecting terminal of the second port and a connecting terminal of the first port are connected so as to establish the first connection. As other implementation manners, the first port and the second port may establish a first connection by using a Universal Serial Bus (USB) joint connecting manner, a DC-JACK joint connecting manner and other connecting manners.

In the present embodiment, as an implementation manner, a large-capacity rechargeable battery may be disposed in the charging device, and when the charging device is not connected with a power line, the rechargeable battery in the charging device may charge the wireless earphone via the first connection. As another implementation manner, the charging device may also be connected with a power line, and the charging device may charge the wireless earphone via the first connection based on electric energy supplied by the power line.

In the present embodiment, the first connection establish based on a physical connection manner has a function of transmitting electric energy, and may also transmit data, that is, data may be transmitted between the charging device and the wireless earphone via the first connection. Herein, the first port and the second port are based on the same communication protocol, and have the same structure. For example, the first port and the second port are provided with a first channel for transmitting electric energy and a second channel for transmitting data separately. The first connection based on the physical connection manner is higher in transmission speed, and does not need to be supported by a mobile terminal and a wireless network, thereby eliminating unnecessary flow consumption of the mobile terminal.

In the present embodiment, a wireless communication module may be disposed in the charging device, and the charging device may establish a wireless connection with the wireless earphone through the wireless communication module of the charging device. In the present implementation manner, it is not limited that data is transmitted between the charging device and the wireless earphone after the first connection is established between the wireless earphone and the charging device, that is, when the wireless earphone is placed in the charging device and charged, data is transmitted, and the charging device may also transmit data between the charging device and the wireless earphone via the wireless communication module of the charging device. Certainly, when the wireless earphone is not charged in the charging device, the charging device may also transmit data between the charging device and the wireless earphone via the wireless communication module of the charging device. Herein, the wireless communication module may, specifically, be at least one of a Wireless-Fidelity (Wi-Fi) module, a Bluetooth module or a mobile data network module (such as 2G/3G/4G networks).

In a specific implementation process, an indicator lamp for indicating a data transmission progress and/or a charging progress may be disposed in the charging device. As an implementation manner, the indicator lamp indicates the data transmission progress and/or the charging progress via a display state of the indicator lamp. For example, when the indicator lamp is red, it is indicated that data is transmitted currently or charging is performed currently, and when the indicator lamp is green, it is indicated that data transmission is already completed or charging is already completed. As another implementation manner, multiple indicator lamps indicate the data transmission progress and/or the charging progress via display states of the indicator lamps. For example, when the charging device is provided with three indicator lamps, only one or two of the three indicator lamps are turned on, and it is indicated that data is transmitted currently or charging is performed currently, and when all of the three indicator lamps are turned on, it is indicated that data transmission is already completed or charging is already completed. Certainly, the above example is only one of the implementation manners. An implementation manner of how to indicate, by an indicator lamp, a data transmission progress and/or a charging progress is not limited in the present embodiment.

By means of the technical solutions in the embodiments of the disclosure, in a charging process of a wireless earphone by a charging device, a data transmission channel is added to a charging interface, so that a data transmission function is added to the charging device, data interaction between the charging device and the wireless earphone is achieved, and data of the wireless earphone is updated in the charging process of the wireless earphone as well.

### Embodiment 2

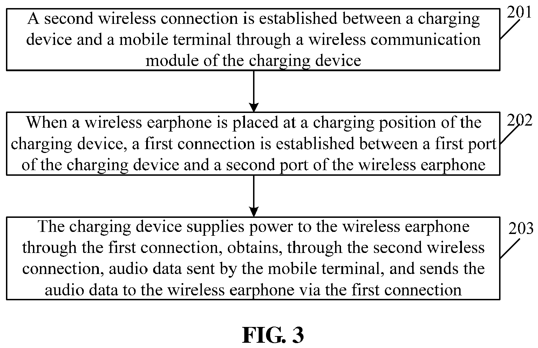

Based on the embodiment 1, the embodiment of the disclosure also provides a data processing method, applied to a charging device provided with a charging position. FIG. 3 shows a flowchart of a data processing method according to an embodiment 2 of the disclosure. As shown in FIG. 3, the method includes the steps as follows.

In step 201, a second wireless connection is established between the charging device and a mobile terminal through a wireless communication module of the charging device.

In step 202, when a wireless earphone is placed at the charging position of the charging device, a first connection is established between a first port of the charging device and a second port of the wireless earphone.

In step 203, the charging device supplies power to the wireless earphone through the first connection, obtains, through the second wireless connection, data sent by the mobile terminal, and sends the data to the wireless earphone via the first connection.

In the present embodiment, a wireless communication module is also disposed in the charging device. The wireless communication module may, specifically, be at least one of a Wi-Fi module, a Bluetooth module or a mobile data network module (such as 2G/3G/4G networks). The wireless communication module is certainly not limited to the listed wireless communication modules. When the wireless communication module is Wi-Fi, the wireless communication module supports to connect routing equipment in a corresponding network. Correspondingly, the mobile terminal also has a corresponding wireless communication module. The charging device and the mobile terminal may establish a second wireless connection through the respective wireless communication modules. In the present embodiment, a process of establishing a first connection between the charging device and the wireless earphone may refer to the embodiment 1, and will not be elaborated herein. Certainly, in the present embodiment, a wireless connection may be established between the charging device and the wireless earphone via the wireless communication module of the charging device, so as to transmit data through the wireless connection. That is to say, in the present embodiment, a manner of data interaction between the charging device and the wireless earphone is not limited to the first connection based on a physical connection, or may be a wireless connection manner based on a wireless communication module.

In the present embodiment, data transmitted between the charging device and the wireless earphone may, specifically, be audio data such as music data, cross-talk data and radio station data, or may be data such as application data, a file and a control instruction. As an implementation manner, transmitting data between the charging device and the wireless earphone via the first connection includes: obtaining, by the charging device through the second wireless connection, data sent by the mobile terminal; and sending, by the charging device, the data to the wireless earphone via the first connection.

In the present embodiment, as an implementation manner, a storage module may also be disposed in the charging device, the mobile terminal may send data to the charging device via the second wireless connection based on an operation of a user, and the sent data may be stored in the storage module of the charging device. Further, after a first connection is established between the charging device and the wireless earphone or after a wireless connection is established between the charging device and the wireless earphone, the charging device may send the stored data to the wireless earphone. In the present embodiment, the wireless earphone is provided with a storage region, wherein relevant information (such as software version information) about the wireless earphone and audio data may be stored in the storage region. That is to say, even if the wireless earphone does not establish a wireless connection with the mobile terminal, audio data stored in the wireless earphone may be played. However, due to a small capacity of the storage region, the quantity of the stored audio data is small. Therefore, it is necessary to update the audio data stored in the storage region. On the basis of this, after a first connection is established between the wireless earphone and the charging device, the charging device may supply power to the wireless earphone through the first connection, and the charging device may send audio data stored in the charging device to the wireless earphone and update the audio data stored in the wireless earphone. Or, after a wireless connection is established between the wireless earphone and the charging device, the charging device may transmit data between the charging device and the wireless earphone through the wireless connection, so as to update the audio data stored in the wireless earphone. Herein, the storage module in the charging device may be specifically implemented by means of a non-volatile storage unit such as a flash EEPROM.

As another implementation manner, a storage module may not be disposed in the charging device. After a first connection is established between the charging device and the wireless earphone and the second wireless connection is established between the charging device and the mobile terminal, or after a wireless connection is established between the charging device and the wireless earphone and the second wireless connection is established between the charging device and the mobile terminal, the mobile terminal may send data to the charging device via the second wireless connection based on an operation of a user, and the charging device sends the received data to the wireless earphone directly via the first connection or the wireless connection.

Compared with direct transmission, the manner of storing and transmitting in sequence has the advantages that a more flexible choice in usage is provided for a user. For example, the user may self-select to update the stored contents to the earphone.

By means of the technical solutions in the embodiments of the disclosure, in a charging process of a wireless earphone by a charging device, a data transmission channel is added to a charging interface, so that a data transmission function is added to the charging device, data interaction between the charging device and the wireless earphone is achieved, and data of the wireless earphone is updated in the charging process of the wireless earphone as well. In addition, a wireless communication module is added to the charging device, so as to achieve a wireless communication function of the charging device. Based on the wireless communication function, data interaction may be achieved between a mobile terminal and the charging device, data interaction based on wireless data transmission may be achieved between the charging device and the wireless earphone, the mobile terminal can remotely control the charging device, and a user at a place can conveniently control a charging device at another place, thereby greatly improving the user experience.

### Embodiment 3

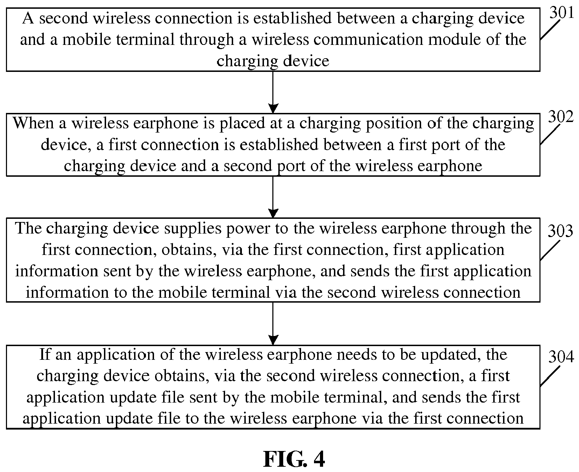

Based on the embodiment 1, the embodiment of the disclosure also provides a data processing method, applied to a charging device provided with a charging position. FIG. 4 shows a flowchart of a data processing method according to an embodiment 3 of the disclosure. As shown in FIG. 4, the method includes the steps as follows.

In step 301, a second wireless connection is established between the charging device and a mobile terminal through a wireless communication module of the charging device.

In step 302, when a wireless earphone is placed at the charging position of the charging device, a first connection is established between a first port of the charging device and a second port of the wireless earphone.

In step 303, the charging device supplies power to the wireless earphone through the first connection, obtains, via the first connection, first application information sent by the wireless earphone, and sends the first application information to the mobile terminal via the second wireless connection.

In step 304, if an application of the wireless earphone needs to be updated, the charging device obtains, via the second wireless connection, a first application update file sent by the mobile terminal, and sends the first application update file to the wireless earphone via the first connection, so as to update the application of the wireless earphone.

In the present embodiment, a process of establishing a second wireless connection between the charging device and the mobile terminal may specifically refer to the embodiment 2, and will not be elaborated herein. A process of establishing a first connection between the charging device and the wireless earphone may specifically refer to the embodiment 1, and will not be elaborated herein.

The present embodiment is illustrated with charging and data interaction between the wireless earphone and the charging device via a first connection. After the first connection is established between the wireless earphone and the charging device, the charging device may supply power to the wireless earphone through the first connection, and the wireless earphone may send own first application information to the charging device through the first connection. For example, the first application information is software version information.

In the present embodiment, after obtaining the first application information of the wireless earphone, the charging device sends the application information to the mobile terminal via the second wireless connection, the mobile terminal further sends the first application information to a server, the server determines whether an application of the wireless earphone needs to be updated based on the first application information, and if so, as an implementation manner, the server sends reminding information to the mobile terminal so as to remind a user of update of the application of the wireless earphone. The mobile terminal may download a first application update file after determining to update the application of the wireless earphone based on an operation of a user, and send the first application update file to the charging device via the second wireless connection. The charging device sends the first application update file to the wireless earphone via the first connection, and the wireless earphone updates and upgrades an own application program.

By means of the technical solutions in the embodiments of the disclosure, in a charging process of a wireless earphone by a charging device, a data transmission channel is added to a charging interface, so that a data transmission function is added to the charging device, data interaction between the charging device and the wireless earphone is achieved, and data of the wireless earphone is updated in the charging process of the wireless earphone as well. In addition, a wireless communication module is added to the charging device, so as to achieve a wireless communication function of the charging device. Based on the wireless communication function, data interaction may be achieved between a mobile terminal and the charging device, data interaction based on wireless data transmission may be achieved between the charging device and the wireless earphone, the mobile terminal can remotely control the charging device, and a user at a place can conveniently control a charging device at another place, thereby greatly improving the user experience.

### Embodiment 4

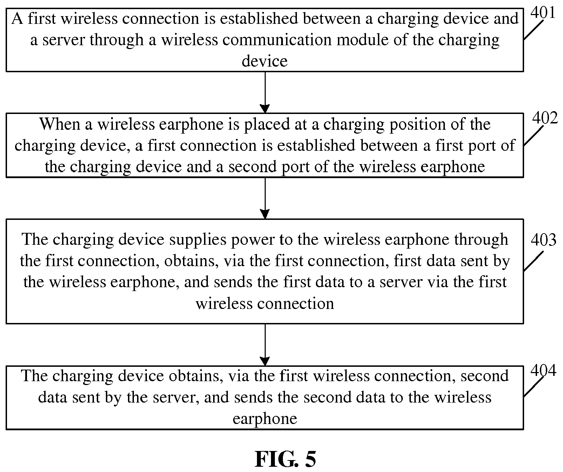

Based on the embodiment 1, the embodiment of the disclosure also provides a data processing method, applied to a charging device provided with a charging position. FIG. 5 shows a flowchart of a data processing method according to an embodiment 4 of the disclosure. As shown in FIG. 5, the method includes the steps as follows.

In step 401, a first wireless connection is established between the charging device and a server through a wireless communication module of the charging device.

In step 402, when a wireless earphone is placed at the charging position of the charging device, a first connection is established between a first port of the charging device and a second port of the wireless earphone.

In step 403, the charging device supplies power to the wireless earphone through the first connection, obtains, via the first connection, first block of data sent by the wireless earphone, and sends the first block of data to a server via the first wireless connection, here the server will make some change like NAT (Network address translation) or additional encapsulation, or encoding/decoding.

In step 404, the charging device obtains, via the first wireless connection, second block of data sent by the server, and sends the second block of data to the wireless earphone, here the wireless earphone will make some change like NAT (Network address translation) or additional encapsulation, or encoding/decoding.

In the present embodiment, a wireless communication module is disposed in the charging device. The wireless communication module may, specifically, be at least one of a Wi-Fi module, a Bluetooth module or a mobile data network module (such as 2G/3G/4G networks). The wireless communication module is certainly not limited to the listed wireless communication modules. When the wireless communication module is Wi-Fi, the wireless communication module supports to connect routing equipment in a corresponding network. Correspondingly, the server also has a corresponding wireless communication module. The charging device and the server may establish a first wireless connection through the respective wireless communication modules. A process of establishing a first connection between the charging device and the wireless earphone may specifically refer to the embodiment 1, and will not be elaborated herein. Certainly, in the present embodiment, a wireless connection may be established between the charging device and the wireless earphone via the wireless communication module of the charging device, so as to transmit data through the wireless connection. That is to say, in the present embodiment, a manner of data interaction between the charging device and the wireless earphone is not limited to the first connection based on a physical connection, or may be a wireless connection manner based on a wireless communication module.

In the present embodiment, on one hand, the mobile terminal may establish a third wireless connection with the server via a wireless communication technology (e.g., a Wi-Fi technology or a mobile communication technology such as 3G and 4G), so as to perform data exchange with the server according to the third wireless connection, and on the other hand, the charging device may establish a second wireless connection with the mobile terminal. In the present implementation manner, the mobile terminal may establish a direct communication connection (i.e., the first wireless connection) between the charging device and the server through an operation of a user; or, when the mobile terminal and the charging device establish a second wireless connection and the mobile terminal and the server establish a third wireless connection, the charging device automatically establishes the first wireless connection with the server. In a specific implementation process, the mobile terminal may send information (such as device identification and address information) of the charging device to the server, or send information (such as server identification and address information) of the server to the charging device, such that the charging device and the server directly establish the first wireless connection based on the received information.

In the present embodiment, data transmitted between the charging device and the wireless earphone may, specifically, be audio data such as music data, cross-talk data and radio station data, or may be data such as application data, a file and a control instruction. As an implementation manner, transmitting data between the charging device and the wireless earphone via the first connection or transmitting data between the charging device and the wireless earphone via the wireless connection includes: obtaining, by the charging device through the first wireless connection, data sent by the server; and sending, by the charging device, the data to the wireless earphone via the first connection or the wireless connection. As another implementation manner, transmitting data between the charging device and the wireless earphone via the first connection includes: obtaining, by the charging device via the first connection, first application information sent by the wireless earphone, the first application information being software version information for example; sending the first application information to the server via the first wireless connection; and if an application of the wireless earphone needs to be updated, obtaining, by the charging device via the first wireless connection, a first application update file sent by the server, and sending the first application update file to the wireless earphone via the first connection, so as to update the application of the wireless earphone.

Specifically, after obtaining the first application information of the wireless earphone, the charging device sends the first application information to the server via the first wireless connection, the server determines whether an application of the wireless earphone needs to be updated based on the first application information, and if so, the server downloads a first application update file, and directly sends the first application update file to the charging device via the first wireless connection. The charging device sends the first application update file to the wireless earphone via the first connection, and the wireless earphone updates and upgrades an own application program.

In other implementation manners, if the mobile terminal detects that the second wireless connection is already established with the charging device, and after a third wireless connection is established between the mobile terminal and the server, if the server determines that the application of the wireless earphone needs to be updated based on the first application information, the server may synchronize a first application update file to the mobile terminal according to the third wireless connection, the mobile terminal sends the first application update file to the charging device via the second wireless connection, the charging device sends the first application update file to the wireless earphone according to the first connection, and the wireless earphone updates and upgrades an own application program.

Certainly, according to the above two data interaction manners, other data such as music data, cross-talk data, radio station data and other audio data may be interacted. Under an application scenario in which the server directly sends audio data to the charging device, the server may obtain, according to a pre-configured keyword or label, audio data satisfying the keyword or label, and send the obtained audio data to the charging device, wherein the keyword or the label is a singer's name, a music type or the like. In other implementation manners, the server may obtain audio data based on a user indicator sent by the mobile terminal, and send the obtained audio data to the charging device.

By means of the technical solutions in the embodiments of the disclosure, in a charging process of a wireless earphone by a charging device, a data transmission channel is added to a charging interface, so that a data transmission function is added to the charging device, data interaction between the charging device and the wireless earphone is achieved, and data of the wireless earphone is updated in the charging process of the wireless earphone as well. In addition, a wireless communication module is added to the charging device, so as to achieve a wireless communication function of the charging device. Based on the wireless communication function, data interaction may be achieved between a mobile terminal and the charging device, data interaction based on wireless data transmission may be achieved between the charging device and the wireless earphone, the mobile terminal can remotely control the charging device, and a user at a place can conveniently control a charging device at another place, thereby greatly improving the user experience.

### Embodiment 5

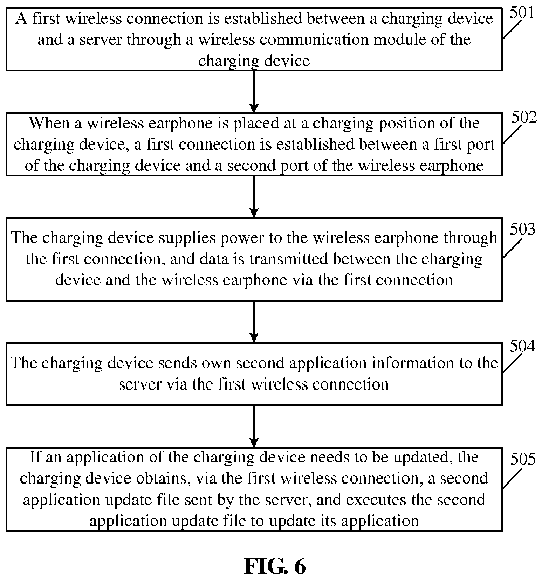

The embodiment of the disclosure also provides a data processing method, applied to a charging device provided with a charging position. FIG. 6 shows a flowchart of a data processing method according to an embodiment 5 of the disclosure. As shown in FIG. 6, the method includes the steps as follows.

In step 501, a first wireless connection is established between the charging device and a server through a wireless communication module of the charging device.

In step 502, when a wireless earphone is placed at the charging position of the charging device, a first connection is established between a first port of the charging device and a second port of the wireless earphone.

In step 503, the charging device supplies power to the wireless earphone through the first connection, and data is transmitted between the charging device and the wireless earphone via the first connection.

In step 504, the charging device sends own second application information to the server via the first wireless connection.

In step 505, if an application of the charging device needs to be updated, the charging device obtains, via the first wireless connection, a second application update file sent by the server, and executes the second application update file to update its own application.

In the present embodiment, an implementation process of step 501 to step 503 may specifically refer to the embodiment 4, and will not be elaborated herein.

In the present embodiment, data exchange may be performed between the charging device and the server via the first wireless connection. Specifically, due to the fact that an own intelligent attribute of the charging device needs to be implemented by executing an application, and based on functional increase of the charging device, the application of the charging device needs to be continuously upgraded. Therefore, corresponding application information (i.e., second application information) is stored in a storage module of the charging device, the application information being version information or the like for example. The charging device may send the application information to the server via the first wireless connection, the server determines whether an application of the charging device needs to be updated based on the second application information, and if so, as an implementation manner, the charging device directly obtains a second application update file sent by the server, and the charging device executes the second application update file to update an own application program. As another implementation manner, the server may send reminding information to the mobile terminal via a third wireless connection, so as to remind a user of update of the application of the charging device. The mobile terminal may download a second application update file corresponding to the charging device after determining to update the application of the charging device based on an operation of a user, and send the second application update file corresponding to the charging device via the server. The second application update file is sent to the charging device via the first wireless connection, and the charging device executes the second application update file to update an own application program.

By means of the technical solutions in the embodiments of the disclosure, in a charging process of a wireless earphone by a charging device, a data transmission channel is added to a charging interface, so that a data transmission function is added to the charging device, data interaction between the charging device and the wireless earphone is achieved, and data of the wireless earphone is updated in the charging process of the wireless earphone as well. In addition, a wireless communication module is added to the charging device, so as to achieve a wireless communication function of the charging device. Based on the wireless communication function, data interaction may be achieved between a mobile terminal and the charging device, data interaction based on wireless data transmission may be achieved between the charging device and the wireless earphone, the mobile terminal can remotely control the charging device, and a user at a place can conveniently control a charging device at another place, thereby greatly improving the user experience.

### Embodiment 6

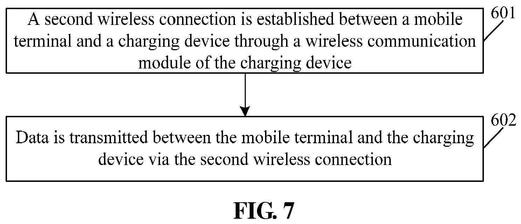

The embodiment of the disclosure also provides a data processing method, applied to a mobile terminal. FIG. 7 shows a flowchart of a data processing method according to an embodiment 6 of the disclosure. As shown in FIG. 7, the method includes the steps as follows.

In step 601, a second wireless connection is established between the mobile terminal and a charging device through a wireless communication module of the charging device.

In step 602, data is transmitted between the mobile terminal and the charging device via the second wireless connection.

The data processing method in the present embodiment may be applied to a mobile terminal. The mobile terminal may, specifically, be a portable mobile terminal such as a mobile phone, a tablet computer, a notebook computer and a smart watch. Certainly, the data processing method in the present embodiment may also be applied to a fixed terminal such as a desktop computer.

In the present embodiment, the mobile terminal may run a specific application (i.e., APP). Functions of the specific application correspond to a wireless earphone, a charging device and a corresponding server. As an implementation manner, when starting the specific application, the mobile terminal initiates establishment of a second wireless connection with the charging device. Certainly, in other implementation manners, after starting the specific application, the mobile terminal may initiate establishment of a second wireless connection with the charging device based on an operation of a user. Specifically, the user may trigger the mobile terminal to find equipment by operating a corresponding key on an operation interface of the specific application, so as to initiate a second wireless connection with the charging device.

As an implementation manner, establishing a second wireless connection between the mobile terminal and the charging device includes: sending, by the mobile terminal, a data packet; receiving a response data packet sent by the charging device, the response data packet including attribute information; verifying the attribute information; and when verification of the attribute information is passed, establishing a second wireless connection with the charging device.

Specifically, after starting the specific application, the mobile terminal initiates a finding flow of equipment. Specifically, in a wireless network (the wireless network is a Wi-Fi network or a mobile communication network, e.g.) where the mobile terminal is located, the mobile terminal sends a data packet according to a pre-set rule (e.g., at a time interval); if a charging device in the same network receives the data packet, a response data packet containing own attribute information is sent, wherein the attribute information may usually include the type, model and other contents of the charging device; after receiving the response data packet, the mobile terminal compares whether the attribute information contained in the response data packet is an attribute supported by the mobile terminal; an attribute information set supported by the mobile terminal is pre-configured in the mobile terminal, wherein the attribute information set includes the supported type, model and contents; and if determining that the attribute information contained in the response data packet is an attribute supported by the mobile terminal, the mobile terminal may determine that the charging device is effective equipment, and establishes a second wireless connection with the charging device. Certainly, the mobile terminal may establish a wireless connection with the wireless earphone in the above manner, this process being not elaborated herein.

In the present embodiment, based on the second wireless connection, the mobile terminal may perform data interaction with the charging device, interacted data being not limited to audio data, an application file and the like, in order that when the wireless earphone is charged in a charging position of the charging device, the audio data in the wireless earphone is updated, or the application file of the wireless earphone is updated. In addition, the charging device supports a wireless communication function, thereby making it convenient for a user to remotely control the charging device via the mobile terminal, and improving the operation experience of the user.

By means of the technical solutions in the embodiments of the disclosure, in a charging process of a wireless earphone by a charging device, a data transmission channel is added to a charging interface, so that a data transmission function is added to the charging device, data interaction between the charging device and the wireless earphone is achieved, and data of the wireless earphone is updated in the charging process of the wireless earphone as well. In addition, a wireless communication module is added to the charging device, so as to achieve a wireless communication function of the charging device. Based on the wireless communication function, data interaction may be achieved between a mobile terminal and the charging device, data interaction based on wireless data transmission may be achieved between the charging device and the wireless earphone, the mobile terminal can remotely control the charging device, and a user at a place can conveniently control a charging device at another place, thereby greatly improving the user experience.

### Embodiment 7

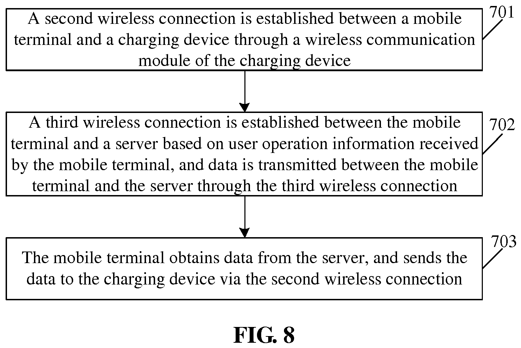

Based on the embodiment 6, the embodiment of the disclosure also provides a data processing method, applied to a mobile terminal. FIG. 8 shows a flowchart of a data processing method according to an embodiment 7 of the disclosure. As shown in FIG. 8, the method includes the steps as follows.

In step 701, a second wireless connection is established between the mobile terminal and a charging device through a wireless communication module of the charging device.

In step 702, a third wireless connection is established between the mobile terminal and a server based on user operation information received by the mobile terminal, and data is transmitted between the mobile terminal and the server through the third wireless connection.

In step 703, the mobile terminal obtains data from the server, and sends the data to the charging device via the second wireless connection.

In the present embodiment, a process of establishing a second wireless connection between the mobile terminal and the charging device may specifically refer to the embodiment 6, and will not be elaborated herein.

In the present embodiment, the mobile terminal may run a specific application (i.e., APP). Functions of the specific application correspond to a wireless earphone, a charging device and a server. That is, the server may be interpreted as a server corresponding to the specific application. As an implementation manner, when the mobile terminal starts the specific application, a user may apply for a user name and a password in an account registration manner. Further, the user name and the password are input, after server authentication of the input user name and password is passed, the user may log in the server via the specific application. That is, the mobile terminal establishes the third wireless connection with the server currently, and performs data exchange with the server via the third wireless connection.

In the present embodiment, after the third wireless connection is established between the mobile terminal and the server, the mobile terminal may download audio data from the server via an input operation of a user, or, the server automatically pushes audio data satisfying user preferences based on a pre-configured user preference label of the mobile terminal, wherein the audio data may, specifically, be a song. Based on the above implementation manner, the mobile terminal may obtain, via the third wireless connection, the audio data sent by the server; and the audio data is directly sent to the charging device via the second wireless connection. As another implementation manner, if the mobile terminal obtains, via the third wireless connection, the audio data sent by the server and the mobile terminal does not establish the second wireless connection with the charging device, the mobile terminal stores the audio data locally, and after establishing the second wireless connection with the charging device, the mobile terminal sends the audio data to the charging device via the second wireless connection.

As another implementation manner, if the third wireless connection is established between the mobile terminal and the server and the second wireless connection is established between the mobile terminal and the charging device, a direct communication connection (i.e., first wireless connection) is established between the charging device and the server. In the present implementation manner, if a user desires to directly perform data exchange between the charging device and the server, an operation of synchronizing data to charging equipment may be selected via an operation interface of the specific application, the mobile terminal may send information (such as device identification and address information) of the charging device to the server, and/or send information (such as server identification and address information) of the server to the charging device, such that the charging device and the server establish a first wireless connection based on the received information. The server may automatically push audio data satisfying user preferences based on a pre-configured user preference label of the mobile terminal via the first wireless connection without the mobile terminal. Equivalently, the charging device directly obtains data from the server.

By means of the technical solutions in the embodiments of the disclosure, in a charging process of a wireless earphone by a charging device, a data transmission channel is added to a charging interface, so that a data transmission function is added to the charging device, data interaction between the charging device and the wireless earphone is achieved, and data of the wireless earphone is updated in the charging process of the wireless earphone as well. In addition, a wireless communication module is added to the charging device, so as to achieve a wireless communication function of the charging device. Based on the wireless communication function, data interaction may be achieved between a mobile terminal and the charging device, data interaction based on wireless data transmission may be achieved between the charging device and the wireless earphone, the mobile terminal can remotely control the charging device, and a user at a place can conveniently control a charging device at another place, thereby greatly improving the user experience.

### Embodiment 8

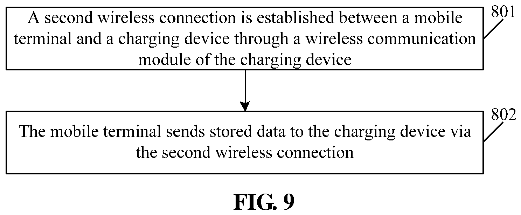

Based on the embodiment 6, the embodiment of the disclosure also provides a data processing method, applied to a mobile terminal. FIG. 9 shows a flowchart of a data processing method according to an embodiment 8 of the disclosure. As shown in FIG. 9, the method includes the steps as follows.

In step 801, a second wireless connection is established between the mobile terminal and a charging device through a wireless communication module of the charging device.

In step 802, the mobile terminal sends stored audio data to the charging device via the second wireless connection.

Different from the embodiment 7, in the present embodiment, after the second wireless connection is established between the mobile terminal and the charging device, the mobile terminal sends locally-stored audio data to the charging device via the second wireless connection. That is, under the condition that the mobile terminal is not networked to a server, the mobile terminal may send the stored audio data to the charging device via the second wireless connection. Correspondingly, the charging device may also send data to the mobile terminal via the second wireless connection.

By means of the technical solutions in the embodiments of the disclosure, in a charging process of a wireless earphone by a charging device, a data transmission channel is added to a charging interface, so that a data transmission function is added to the charging device, data interaction between the charging device and the wireless earphone is achieved, and data of the wireless earphone is updated in the charging process of the wireless earphone as well. In addition, a wireless communication module is added to the charging device, so as to achieve a wireless communication function of the charging device. Based on the wireless communication function, data interaction may be achieved between a mobile terminal and the charging device, data interaction based on wireless data transmission may be achieved between the charging device and the wireless earphone, the mobile terminal can remotely control the charging device, and a user at a place can conveniently control a charging device at another place, thereby greatly improving the user experience.

### Embodiment 9

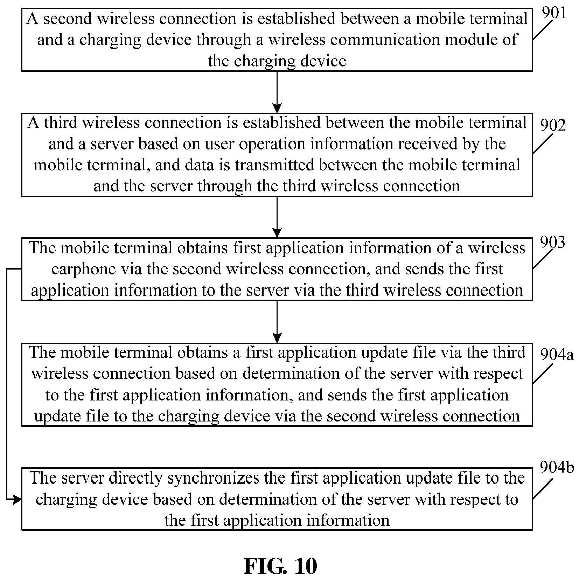

The embodiment of the disclosure also provides a data processing method. FIG. 10 shows a flowchart of a data processing method according to an embodiment 9 of the disclosure. As shown in FIG. 10, the method includes the steps as follows.

In step 901, a second wireless connection is established between the mobile terminal and a charging device through a wireless communication module of the charging device.

In step 902, a third wireless connection is established between the mobile terminal and a server based on user operation information received by the mobile terminal, and data is transmitted between the mobile terminal and the server through the third wireless connection.

In step 903, the mobile terminal obtains first application information of a wireless earphone via the second wireless connection, and sends the first application information to the server via the third wireless connection.

In step 904a, the mobile terminal obtains a first application update file via the third wireless connection based on determination of the server with respect to the first application information, and sends the first application update file to the charging device via the second wireless connection, such that the charging device sends the first application update file to the wireless earphone.

In step 904b, the server directly synchronizes the first application update file to the charging device based on determination of the server with respect to the first application information, such that the charging device sends the first application update file to the wireless earphone.

In the present embodiment, establishment manners for the second wireless connection and the third wireless connection may specifically refer to the above-mentioned embodiments, and will not be elaborated herein.

In the present embodiment, after obtaining the first application information of the wireless earphone, the charging device sends the first application information to the mobile terminal via the second wireless connection, the mobile terminal further sends the first application information to the server, and the server determines whether an application of the wireless earphone needs to be updated based on the first application information. As other implementation manners, the charging device may directly send the first application information to the server.

In the present embodiment, on one hand, the mobile terminal may establish a third wireless connection with the server via a wireless communication technology (e.g., a Wi-Fi technology or a mobile communication technology such as 3G and 4G), so as to perform data exchange with the server according to the third wireless connection, and on the other hand, the charging device may establish a second wireless connection with the mobile terminal. In the present implementation manner, after the second wireless connection is established between the charging device and the mobile terminal and the third wireless connection is established between the mobile terminal and the server, a direct communication connection (i.e., first wireless connection) is established between the charging device and the server. In the present implementation manner, the mobile terminal may send information (such as device identification and address information) of the charging device to the server, and/or send information (such as server identification and address information) of the server to the charging device, such that the charging device and the server establish the first wireless connection based on the received information. Based on this, step 904a or step 904b may be adopted for implementation according to different transmission manners based on determination of the server with respect to the first application information.

In step 904a, if the server determines that the application of the wireless earphone needs to be updated, the server may obtain a first application update file and send the first application update file to the mobile terminal, the mobile terminal sends the first application update file to the charging device, and the charging device transmits the first application update file to the wireless earphone to update the application.

In step 904b, if the server determines that the application of the wireless earphone needs to be updated, the server may obtain a first application update file and directly send the first application update file to the charging device via the first wireless connection, the charging device sends the first application update file to the wireless earphone via the first wireless connection, and the wireless earphone updates and upgrades an own application program.

By means of the technical solutions in the embodiments of the disclosure, in a charging process of a wireless earphone by a charging device, a data transmission channel is added to a charging interface, so that a data transmission function is added to the charging device, data interaction between the charging device and the wireless earphone is achieved, and data of the wireless earphone is updated in the charging process of the wireless earphone as well. In addition, a wireless communication module is added to the charging device, so as to achieve a wireless communication function of the charging device. Based on the wireless communication function, data interaction may be achieved between a mobile terminal and the charging device, data interaction based on wireless data transmission may be achieved between the charging device and the wireless earphone, the mobile terminal can remotely control the charging device, and a user at a place can conveniently control a charging device at another place, thereby greatly improving the user experience.

### Embodiment 10

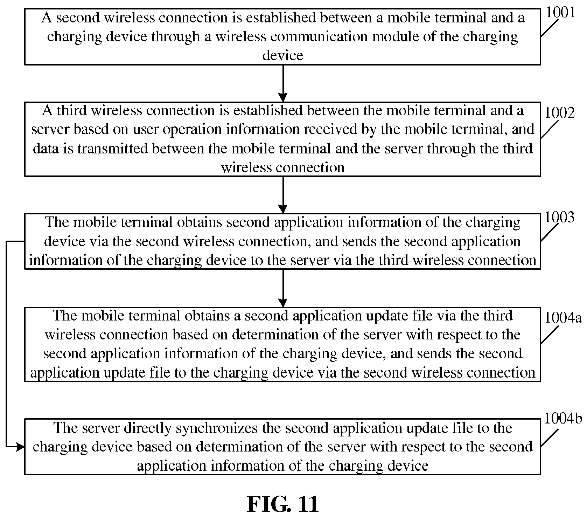

The embodiment of the disclosure also provides a data processing method. FIG. 11 shows a flowchart of a data processing method according to an embodiment 10 of the disclosure. As shown in FIG. 11, the method includes the steps as follows.

In step 1001, a second wireless connection is established between the mobile terminal and a charging device through a wireless communication module of the charging device.

In step 1002, a third wireless connection is established between the mobile terminal and a server based on user operation information received by the mobile terminal, and data is transmitted between the mobile terminal and the server through the third wireless connection.

In step 1003, the mobile terminal obtains second application information of the charging device via the second wireless connection, and sends the second application information of the charging device to the server via the third wireless connection.

In step 1004a, the mobile terminal obtains a second application update file via the third wireless connection based on determination of the server with respect to the second application information of the charging device, and sends the second application update file to the charging device via the second wireless connection, such that the charging device executes the second application update file.

In step 1004b, the server directly synchronizes the second application update file to the charging device based on determination of the server with respect to the second application information of the charging device, such that the charging device executes the second application update file.

In the present embodiment, establishment manners for the second wireless connection and the third wireless connection may specifically refer to the above-mentioned embodiments, and will not be elaborated herein.

In the present embodiment, after obtaining the own second application information, the charging device sends the own second application information to the mobile terminal via the second wireless connection, the mobile terminal further sends the second application information of the charging device to the server, and the server determines whether an application of the charging device needs to be updated based on the second application information of the charging device. As other implementation manners, the charging device may directly send the second application information to the server via a first wireless connection.

In the present embodiment, on one hand, the mobile terminal may establish a third wireless connection with the server via a wireless communication technology (e.g., a Wi-Fi technology or a mobile communication technology such as 3G and 4G), so as to perform data exchange with the server according to the third wireless connection, and on the other hand, the charging device may establish a second wireless connection with the mobile terminal. In the present implementation manner, after the second wireless connection is established between the charging device and the mobile terminal and the third wireless connection is established between the mobile terminal and the server, a direct communication connection (i.e., first wireless connection) is established between the charging device and the server. In the present implementation manner, the mobile terminal may send information (such as device identification and address information) of the charging device to the server, and/or send information (such as server identification and address information) of the server to the charging device, such that the charging device and the server establish the first wireless connection based on the received information. Based on this, step 1004a or step 1004b may be adopted for implementation according to different transmission manners based on determination of the server with respect to the second application information.

In step 1004a, if the server determines that the application of the charging device needs to be updated, the server may obtain a second application update file and send the second application update file to the mobile terminal, the mobile terminal sends the second application update file to the charging device, and the charging device executes the second application update file to update the application.

In step 1004b, if the server determines that the application of the charging device needs to be updated, the server may obtain a second application update file and directly send the second application update file to the charging device via the first wireless connection, and the charging device executes the second application update file to update the application.

By means of the technical solutions in the embodiments of the disclosure, in a charging process of a wireless earphone by a charging device, a data transmission channel is added to a charging interface, so that a data transmission function is added to the charging device, data interaction between the charging device and the wireless earphone is achieved, and data of the wireless earphone is updated in the charging process of the wireless earphone as well. In addition, a wireless communication module is added to the charging device, so as to achieve a wireless communication function of the charging device. Based on the wireless communication function, data interaction may be achieved between a mobile terminal and the charging device, data interaction based on wireless data transmission may be achieved between the charging device and the wireless earphone, the mobile terminal can remotely control the charging device, and a user at a place can conveniently control a charging device at another place, thereby greatly improving the user experience.

In each of the above-mentioned embodiments of the disclosure, data obtained by a charging device (from a server or a mobile terminal) may include at least one of the following data: music, radio station, cross-talk, application information, file, control instruction or the like.

Data sent to the server by the charging device may include at least one of the following data: configuration information (e.g., application information such as an application version number), identity information (e.g., user information of a wireless earphone), user preferences, or motion and health data (e.g., pulse data and heartbeat data). The above-mentioned identity information, user preferences and motion and health data may be obtained from the wireless earphone or the mobile terminal.

In the data processing method applied to a mobile terminal according to the embodiment 6 to the embodiment 10 of the disclosure, the method may further include: establishing a fourth wireless connection between the mobile terminal and the wireless earphone; and transmitting data between the mobile terminal and the wireless earphone through the fourth wireless connection.

Specifically, the fourth wireless connection may be established between the mobile terminal and the wireless earphone in a communication manner such as wifi and Bluetooth. Certainly, the fourth wireless connection may be established between the mobile terminal and the wireless earphone in other wireless communication manners, not limited to the Bluetooth manner, within the scope of protection of the embodiments of the disclosure.

In the present embodiment, on one hand, the mobile terminal may directly send data, such as audio data, to the wireless earphone via the fourth wireless connection. However, when the fourth wireless connection is established in the Bluetooth manner, the rate of transmitting data via Bluetooth is low. On the other hand, the mobile terminal may send an instruction to the wireless earphone via the fourth wireless connection, the instruction being used to update audio data or an application or the like. The mobile terminal may instruct the wireless earphone to update the application or the audio data based on a user operation, and after receiving the instruction for updating the application or the audio data, the wireless earphone sends own application information to the charging device or sends an audio data update request to the charging device, such that the charging device sends the application information or the audio data update request to the mobile terminal.

In the data processing method applied to a mobile terminal according to the embodiment 6 to the embodiment 10 of the disclosure, the method may further include: establishing a fifth wireless connection between the charging device and communication network equipment through a wireless communication module of the charging device, such that equipment establishing a wireless connection with the charging device establishes a wireless connection with the communication network equipment.

Specifically, the wireless communication module of the charging device may establish a fifth wireless connection with communication network equipment (the communication network equipment may be mobile communication network equipment or Wi-Fi communication network equipment; the mobile communication network equipment is network equipment to which 2G/3G/4G networks pertain), and after the charging device establishes a wireless connection with other equipment, the other equipment may directly establish a wireless connection with the communication network equipment via a routing function of the charging device, so that the other equipment can perform network services. The routing function of the charging device in the present embodiment may be an independent function, or may be a function attached to an important function of transmitting data with a wireless earphone.

### Embodiment 11

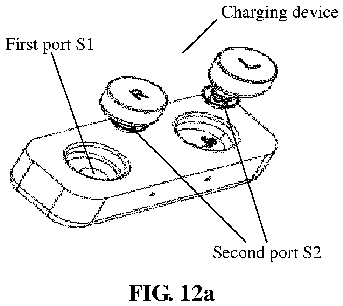

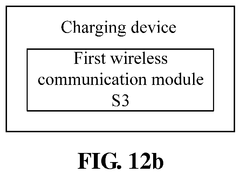

The embodiment of the disclosure also provides a charging device. The charging device may, specifically, be in a form of charging base, or may be in a wearable form such as a charging band. The charging base is taken for example. FIG. 12a illustrates an appearance diagram of a charging device according to an embodiment of the disclosure. FIG. 12b illustrates a module composition structure diagram of a charging device according to an embodiment of the disclosure. As shown in FIG. 12a and FIG. 12b, the charging device is provided with at least one charging position, the charging position matching a wireless earphone. A first port S1 is disposed in the charging position, and is configured to establish, when the wireless earphone is placed at the charging position of the charging device, a first connection with a second port S2 of the wireless earphone. Power is supplied to the wireless earphone through the first connection, and data is transmitted between the charging device and the wireless earphone via the first connection.

Or, the charging device further includes a first wireless communication module S3, configured to establish a wireless connection with the wireless earphone, and transmit data between the charging device and the wireless earphone through the wireless connection.

As an implementation manner, the first wireless communication module S3 is further configured to establish a first wireless connection with a server.

Herein, the first wireless communication module S3 is configured to obtain first block of data sent by the wireless earphone, and send the first block of data to the server, and is further configured to obtain, via the first wireless connection, second block of data sent by the server, and send the second block of data to the wireless earphone.

As an implementation manner, the first wireless communication module S3 is further configured to establish a second wireless connection with a mobile terminal.

Herein, the first wireless communication module S3 is configured to obtain, through the second wireless connection, data sent by the mobile terminal, and is further configured to send data to the mobile terminal through the second wireless connection.

In the present embodiment, after obtaining data sent by the server or the mobile terminal, the first wireless communication module S3 directly sends the data to the wireless earphone, or directly sends the data to the wireless earphone via the first connection; or,
the charging device further includes a storage module, configured to store data sent by the server or the mobile terminal and obtained by the first wireless communication module.

The first wireless communication module S3 is configured to send the stored data to the wireless earphone, or send the stored data to the wireless earphone via the first connection.

As an implementation manner, the first wireless communication module S3 is further configured to establish a fifth wireless connection with communication network equipment, such that equipment establishing a wireless connection with the charging device establishes a wireless connection with the communication network equipment.

Those skilled in the art should understand that functions of each processing unit in the charging device according to the embodiment of the disclosure may be interpreted with reference to relevant description for the above-mentioned data processing method. Each processing unit in the charging device according to the embodiment of the disclosure may be implemented by means of an analog circuit achieving the functions in the embodiment of the disclosure, or may be implemented by running software, for executing the functions in the embodiment of the disclosure, on a smart terminal.

In the embodiment of the disclosure, the first wireless communication module S3 in the charging device may be implemented by means of a communication module (including: a basic communication suite, an operating system, a communication module, a standard interface and protocol, and the like) and a transceiver antenna during practical application.

### Embodiment 12

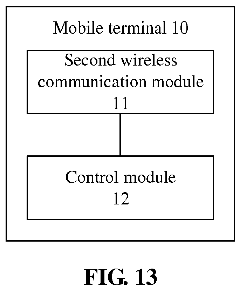

The embodiment of the disclosure also provides a mobile terminal. FIG. 13 illustrates a composition structure diagram of a mobile terminal according to an embodiment of the disclosure. As shown in FIG. 13, the mobile terminal 10 includes: a second wireless communication module 11 and a control module 12, wherein
the control module 12 is configured to enable the second wireless communication module 11; and
the second wireless communication module 11 is configured to establish a second wireless connection with a charging device, and transmit data between the mobile terminal and the charging device via the second wireless connection.

As an implementation manner, the second wireless communication module 11 is configured to: send a data packet; receive a response data packet sent by the charging device, the response data packet including attribute information; verify the attribute information; and when verification of the attribute information is passed, establish a second wireless connection with the charging device.

As an implementation manner, the second wireless communication module 11 is configured to: send stored data to the charging device via the second wireless communication; or, obtain data from a server, and send the data to the charging device via the second wireless communication.

As an implementation manner, the control module 12 is configured to enable the second wireless communication module 11 based on received user operation information.

The second wireless communication module 11 is further configured to, before obtaining data from the server, establish a third wireless connection with the server, and transmit data between the mobile terminal and the server through the third wireless connection.

As an implementation manner, the second wireless communication module 11 is further configured to: obtain, via the second wireless connection, first application information of a wireless earphone, sent by the charging device, and send the first application information to the server via the third wireless connection; obtain a first application update file via the third wireless connection based on determination of the server with respect to the application information, and send the first application update file to the charging device via the second wireless connection, such that the charging device sends the first application update file to the wireless earphone; or, directly synchronize, by the server, the first application update file to the charging device, such that the charging device sends the first application update file to the wireless earphone.

As an implementation manner, the second wireless communication module 11 is further configured to: obtain, via the second wireless connection, second application information of the charging device, and send the second application information of the charging device to the server via the third wireless connection; obtain a second application update file via the third wireless connection based on determination of the server with respect to the second application information of the charging device, and send the second application update file to the charging device via the second wireless connection, such that the charging device executes the second application update file; or, directly synchronize, by the server, the second application update file to the charging device, such that the charging device executes the second application update file.

As an implementation manner, the second wireless communication module 11 is further configured to establish a fourth wireless connection with the wireless earphone, and transmit data between the mobile terminal and the wireless earphone through the fourth wireless connection, wherein the second wireless communication module 11 is further configured to send an instruction to the wireless earphone, the instruction being used to update audio data or an application.

Those skilled in the art should understand that functions of each processing unit in the mobile terminal according to the embodiment of the disclosure may be interpreted with reference to relevant description for the above-mentioned data processing method. Each processing unit in the mobile terminal according to the embodiment of the disclosure may be implemented by means of an analog circuit achieving the functions in the embodiment of the disclosure, or may be implemented by running software, for executing the functions in the embodiment of the disclosure, on a smart terminal.

In the embodiments of the disclosure, the control module 12 in the mobile terminal may be implemented by means of a Central Processing Unit (CPU), a Digital Signal Processor (DSP), a Microcontroller Unit (MCU) or a Field-Programmable Gate Array (FPGA) in the mobile terminal during practical application, and the second wireless communication module 11 in the mobile terminal may be implemented by means of a communication module (including: a basic communication suite, an operating system, a communication module, a standard interface and protocol, and the like) and a transceiver antenna during practical application.

In some embodiments provided by the present application, it should be understood that the disclosed equipment and method may be implemented in another manner. The equipment embodiment described above is only schematic. For example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the equipment or the units, and may be electrical and mechanical or adopt other forms.

The above-mentioned units described as separate parts may or may not be physically separated, and parts displayed as units may or may not be physical units, and namely may be located in the same place, or may also be distributed to multiple network units. Part or all of the units may be selected to achieve the purpose of the solutions of the present embodiment according to a practical requirement.

In addition, each function unit in each embodiment of the disclosure may be integrated into a second processing unit, each unit may also exist independently, and two or more than two units may also be integrated into a unit. The above-mentioned integrated unit may be implemented in a form of hardware, and may also be implemented in a form of hardware and software function unit.

Those of ordinary skill in the art may understand that all or some steps in the above-mentioned method embodiment may be completed by instructing relevant hardware via a program, the program may be stored in a computer-readable storage medium, during execution of the program, the execution includes the steps in the above-mentioned method embodiment, and the storage medium includes: various media capable of storing program codes such as mobile storage equipment, a Read-Only Memory (ROM), a Random Access Memory (RAM), a magnetic disk or an optical disk.

Or, if being implemented in a form of software function module and sold or used as an independent product, the integrated unit mentioned above in the disclosure may be stored in a computer-readable storage medium. Based on this understanding, the technical solutions of the embodiments of the disclosure may be substantially embodied in a form of software product or parts contributing to the related art may be embodied in a form of software product, and the computer software product is stored in a storage medium, including a plurality of instructions enabling computer equipment (may be a personal computer, a server or network equipment) to execute all or some of the methods according to each embodiment of the disclosure. The storage medium includes: various media capable of storing program codes such as mobile storage equipment, an ROM, an RAM, a magnetic disk or an optical disk.

The above is only specific implementations of the disclosure. However, the scope of protection of the disclosure is not limited thereto. As will occur to those skilled in the art, the disclosure is susceptible to various modifications and changes within the technical scope disclosed by the disclosure, and these modifications and changes shall fall within the scope of protection of the disclosure. Therefore, the scope of protection of the disclosure should be determined by the scope of protection of the claims.

## Claims

1. A data processing method, applied to a charging device provided with a charging position, the charging position of the charging device matching a wireless earphone, the method comprising:
when the wireless earphone is placed at the charging position of the charging device, establishing a first connection between a first port of the charging device and a second port of the wireless earphone;
supplying, by the charging device, power to the wireless earphone through the first connection, and transmitting data between the charging device and the wireless earphone via the first connection;
or, establishing a wireless connection between the charging device and the wireless earphone through a wireless communication module of the charging device, and transmitting data between the charging device and the wireless earphone via the wireless connection.

2. The method according to claim 1, further comprising: before transmitting data between the charging device and the wireless earphone,
establishing a first wireless connection between the charging device and a server through the wireless communication module of the charging device.

3. The method according to claim 2, wherein transmitting data between the charging device and the wireless earphone comprises:
obtaining, by the charging device, first block of data sent by the wireless earphone, and sending the first block of data to the server;
accordingly, obtaining, by the charging device through the first wireless connection, second block of data sent by the server, and sending the second block of data to the wireless earphone.

4. The method according to claim 1, further comprising: before transmitting data between the charging device and the wireless earphone,
establishing a second wireless connection between the charging device and a mobile terminal through the wireless communication module of the charging device.

5. The method according to claim 4, wherein transmitting data between the charging device and the wireless earphone via the first connection or transmitting data between the charging device and the wireless earphone via the wireless connection comprises:
obtaining, by the charging device through the second wireless connection, data sent by the mobile terminal; and
sending, by the charging device, the data to the wireless earphone via the first connection or the wireless connection.

6. The method according to claim 3 or 5, wherein transmitting data between the charging device and the wireless earphone via the first connection or transmitting data between the charging device and the wireless earphone via the wireless connection comprises:
after obtaining the data sent by the server or the mobile terminal, sending, by the charging device, the obtained data directly to the wireless earphone through the first connection or the wireless connection; or
after obtaining the data sent by the server or the mobile terminal, storing, by the charging device, the obtained data through a storage module of the charging device, and sending the data stored in the storage module to the wireless earphone through the first connection or the wireless connection.

7. The method according to claim 1, further comprising:
establishing a fifth wireless connection between the charging device and communication network equipment through a wireless communication module of the charging device, so that a device establishing a wireless connection with the charging device establishes a wireless connection with the communication network equipment.

8. A data processing method, applied to a mobile terminal, the method comprising:
establishing a second wireless connection between the mobile terminal and a charging device through a wireless communication module of the charging device; and
transmitting data between the mobile terminal and the charging device via the second wireless connection.

9. The method according to claim 8, wherein establishing the second wireless connection between the mobile terminal and the charging device comprises:
transmitting, by the mobile terminal, a data packet;
receiving, by the mobile terminal, a response data packet sent by the charging device, the response data packet containing attribute information;
verifying the attribute information; and when verification of the attribute information is passed, establishing the second wireless connection between the mobile terminal and the charging device.

10. The method according to claim 8, wherein transmitting data between the mobile terminal and the charging device via the second wireless connection comprises:
sending, by the mobile terminal, stored data to the charging device via the second wireless connection; or
obtaining, by the mobile terminal, data from a server, and sending the obtained data to the charging device via the second wireless connection.

11. The method according to claim 10, further comprising: before obtaining, by the mobile terminal, the data from the server,
establishing a third wireless connection between the mobile terminal and the server based on user operation information received by the mobile terminal, and transmitting the data between the mobile terminal and the server through the third wireless connection.

12. The method according to claim 11, wherein transmitting data between the mobile terminal and the charging device via the second wireless connection comprises:
obtaining, by the mobile terminal, first application information of the wireless earphone through the second wireless connection, and sending the first application information to the server via the third wireless connection; and
obtaining, by the mobile terminal, a first application update file via the third wireless connection based on determination of the server with respect to the first application information, and sending the first application update file to the charging device via the second wireless connection, such that the charging device sends the first application update file to the wireless earphone; or
instructing, by the mobile terminal, the server to directly synchronize the first application update file to the charging device, such that the charging device sends the first application update file to the wireless earphone.

13. The method according to claim 11, wherein transmitting data between the mobile terminal and the charging device via the second wireless connection comprises:
obtaining, by the mobile terminal, second application information of the charging device through the second wireless connection, and sending the second application information to the server via the third wireless connection; and
obtaining, by the mobile terminal, a second application update file via the third wireless connection based on determination of the server with respect to the second application information, and sending the second application update file to the charging device via the second wireless connection, such that the charging device executes the second application update file; or
instructing, by the mobile terminal, the server to directly synchronize the second application update file to the charging device, such that the charging device executes the second application update file.

14. The method according to claim 8, further comprising:
establishing a fourth wireless connection between the mobile terminal and a wireless earphone; and transmitting data between the mobile terminal and the wireless earphone through the fourth wireless connection.

15. A charging device, provided with at least one charging position, the charging position matching a wireless earphone, wherein
the charging position is provided with a first port configured to establish, when the wireless earphone is placed at the charging position of the charging device, a first connection with a second port of the wireless earphone; and power is supplied to the wireless earphone through the first connection, and data is transmitted between the charging device and the wireless earphone via the first connection;
or, the charging device further comprises a first wireless communication module, configured to establish a wireless connection with the wireless earphone, and transmit data between the charging device and the wireless earphone through the wireless connection.
